# EUROPEAN PATENT SPECIFICATION

(11) **EP 3 324 803 B1**
(45) Date of publication and mention of the grant of the patent: **11.09.2019**
(21) Application number: 16741306.1
(22) Date of filing: 20.07.2016
(51) Int. Cl.: A47J 43/07, A47J 43/046

(54) **A DEVICE FOR PREPARING FOOD INGREDIENTS**
VORRICHTUNG ZUR HERSTELLUNG VON NAHRUNGSMITTELBESTANDTEILEN
DISPOSITIF DE PRÉPARATION D'INGRÉDIENTS ALIMENTAIRES

(30) Priority: 20.07.2015 WO PCT/CN2015/084453; 09.12.2015 EP 15198569
(43) Date of publication of application: 30.05.2018
(73) Proprietor: Koninklijke Philips N.V., 5656 AE Eindhoven (NL)
(72) Inventor: IVARSSON, Bengt Ivar Anders, 5656 AE Eindhoven (NL); JIANG, Ou O, 5656 AE Eindhoven (NL); WAN, Vicki, 5656 AE Eindhoven (NL)
(74) Representative: Freeke, Arnold
(86) International application number: PCT/EP2016/067259
(87) International publication number: WO 2017/013155

(56) References cited:
- WO-A2-2010/150263
- FR-A- 532 315
- JP-A- 2004 167 185
- JP-U- S55 163 938
- US-A- 3 147 958

## Description

### FIELD OF THE INVENTION

The present invention relates to the field of kitchen appliances, in particular to a device for preparing food ingredients.

### BACKGROUND OF THE INVENTION

WO 2010/150263 A2 discloses a food processing utensil comprising paddles; central utensil comprising: shaft coupleable to food processor motor, and connected to base couplable to food processor bowl, and cutting blades, the paddles coupled to the central utensil and the blades configured to allow uniform cutting of food, providing paddles are not on blades.

FR 532 315 A discloses a beverage stirring structure comprising an accessory being adapted to rotate about a vertical axis, the accessory comprising a central body extending vertically along the vertical axis; at least one blunt blade extending radially from the central body; and at least one wing extending radially from the central body and comprising at least one opening thereon, the at least one wing being inclined downwards in direction of the tangential direction of the rotation movement of the accessory.

Preparation of paste sauces such as spicy pastes, curries, salsas or sambal sauces requires crushing or mashing a plurality of ingredients, for example chilies, garlic, ginger, onions, shallots, tomatoes etc..., to obtain a chunky, fibrous, thick and not watery sauce.

Traditionally, in order to prepare such paste sauces, the food ingredients can be manually crushed using a pestle and a mortar. However, this method is relatively time and effort consuming.

Alternatively, home appliances such as blenders are known and can be used for preparing such sauces. A blender typically comprises a power base and a jar, the power base having a motor, the jar having sharp blades in its lower part driven to rotate by the motor via a coupling arrangement. The sharp blades rotate at high speed in the jar to cut solid matters of the food ingredients to release liquid as well as liquidize the solid matter itself. Generally, the smoother the resulting liquid is, the better the result is considered. Therefore, conventional blenders are generally optimized for liquefying foods like fruit to make fruit smoothies, juices etc... and are not suitable for preparing thick paste sauces. The taste and texture of the sauce obtained with a conventional blender is too thin and watery and not as rich as desired due the blade cutting process. Using a conventional blender for preparing paste sauces is therefore not satisfactory.

### SUMMARY OF THE INVENTION

It is an object of the invention to provide a device for preparing food ingredients which substantially alleviates or overcomes one or more of the problems mentioned above.

The invention is defined by the independent claims. The dependent claims define advantageous embodiments.

According to the invention, the jar has a lower region, the at least one blunt blade is disposed in the lower region, and the at least one wing is inclined towards the lower region to direct the food towards the lower region when the accessory rotates about the vertical axis, and the at least one wing is inclined at an angle in the range [55; 65] degrees compared to a horizontal axis perpendicular to the vertical axis towards a lower region of the jar. This provides a downwardly orientated pushing force to push the food ingredients towards the bottom of the jar. This ensures that the food ingredients are concentrated at the bottom of the jar, thereby ensuring a maximum efficiency of crushing.

The at least one blunt blade of the accessory avoids cutting the food ingredients. The at least one blunt blade crushes and/or shears the food ingredients to release liquid and flavor, leaving a rich and chunky texture, rather than cutting the food ingredients into smaller and smaller pieces as cutting blades of a conventional blender would do. The at least one wing is inclined relative to the tangential direction of the rotation movement of the accessory so as to direct the food ingredients downwards i.e. towards the at least one blunt blade when the accessory rotates about the vertical axis. This overcomes the problem of having the food ingredients sticking one an inner surface of the jar, improves the mixing of the food ingredients and speeds up the preparation process. The device according to the invention therefore allows preparing a paste sauce having a better texture and taste than a sauce prepared with a conventional blender. The device according to the invention is also easier to use than a pestle and mortar, both in terms of time and effort.

Advantageously, the at least one wing comprises a working surface and a trailing surface, and the trailing surface is inclined towards the at least one blunt blade. Advantageously, the at least one blunt blade comprises a blunt working edge and a trailing edge, and the working surface and the blunt working edge are disposed relative to each other such that, when the accessory rotates about the vertical axis, the food is directed towards the at least one blunt blade by the working surface to be then crushed by the blunt working edge.

The at least one wing comprises at least one opening, which allows the food ingredients to be blended effectively. This also allows for the torque loading of the drive mechanism of the device to be reduced. Advantageously, the at least one opening of a given wing among the at least one wing covers an area in the range [30; 50] % of the total area of the given wing.

Preferably, the at least one wing comprises a free end opposite to the central body, and the at least one wing extends up to reaching the proximity of an inner surface of the jar. This ensures an efficient mixing of the food ingredients. This also overcomes the problem of having the food ingredients sticking one an inner surface of the jar and therefore makes the crushed preparation easy to collect after processing. Preferably, the distance between the free end and the internal surface is in the range [1; 5] millimeters and is advantageously in the range [1; 2] millimeters. This range ensures a good texture for the paste sauce as well as a satisfactory value for the torque loading of the drive mechanism of the device. Preferably, the jar comprises at least one longitudinal rib extending vertically along an inner surface of the jar. Preferably, the jar comprises an odd number of longitudinal ribs.

Preferably, the free end has a profile being complementary of the profile of the at least one longitudinal rib. This allows an improved control of the size and the consistency of the food ingredients.

In one embodiment, the free end is equipped with an elastic rib. Preferably, the elastic rib is in contact with the inner surface of the jar. When the accessory rotates, the elastic rib sweeps the inner surface of the jar, thereby helping to clean the inner surface of the jar. In addition, the elastic rib pushes the food ingredients towards the at least one longitudinal rib so that the food ingredients crashes to the at least one longitudinal rib. This allows speeding up the preparation process.

Advantageously, the accessory is adapted to be secured in the jar in a use position to allow the rotation of the accessory along the vertical axis and to prevent the accessory from translating along the vertical axis.

Preferably, the device comprises a lid for closing the jar, and the lid and the central body comprises a connection element cooperating for coupling the lid to the central body. This allows the accessory to remain in position in the jar during rotation of the accessory in the jar.

Advantageously, the jar comprises a bottom surface, and the at least one blunt blade is located from the bottom surface at a distance in the range [1; 5] millimeters, and preferably in the range [3; 4] millimeters. This allows larger food ingredients to be mixed and blended, rather than being pushed by the at least one blunt blade.

In one embodiment, the at least one blunt blade comprises at least one projection. Preferably, the at least one projection is arranged on the working edge of the at least one blunt blade. Preferably, the at least one projection extends downwards towards the bottom of the jar. Advantageously, the at least one projection extends from the at least one blunt blade up to reaching the proximity of the bottom surface of the jar. Alternatively, the at least one projection touches the bottom surface of the jar. The at least one projection allows for the food ingredients to be stirred upwards in the jar, and therefore consequently blended again by the at least one wing. Preferably, the at least one blunt blade comprises a plurality of projections with a slot extending between two adjacent projections. The slot helps to make the skin of some food ingredients such as chili smaller.

Preferably, the at least one blunt blade and the at least one wing are alternate and distributed at regular angles around the vertical axis.

In one embodiment, the accessory comprises a first blunt blade and a second blunt blade disposed opposite to each other about the central body, and a first wing and a second wing disposed opposite to each other about the central body, and the first wing is inclined towards the first blunt blade and the second wing is inclined towards the second blunt blade.

Preferably, the device comprises a stationary base for receiving the jar, and the stationary base comprises a motor for rotating the accessory around the vertical axis.

These and other aspects of the invention will be apparent from and elucidated with reference to the embodiments described hereinafter.

### BRIEF DESCRIPTION OF THE DRAWINGS

Embodiments of the invention will now be described, by way of example only, with reference to the accompanying drawings, in which:
Figure 1 is a schematic perspective view of a device for preparing food ingredients according to an embodiment of the invention;
Figures 2A, 2B, 2C are perspective views of an accessory of the device of Figure 1;
Figure 3A is a side view of the device of Figure 1;
Figure 3B is a partial perspective view of the device of Figure 1;
Figure 4 is a perspective view of a device for preparing food ingredients according to another embodiment of the invention;
Figures 5A and 5B are perspective views of an accessory of the device of Figure 4;
Figure 6A is a perspective view of a jar and a drive mechanism of the device of Figure 4;
Figure 6B is a perspective view of ajar of the device of Figure 4;
Figure 6C is a perspective view of a drive mechanism of the device of Figure 4;
Figure 6D is a top view of a planetary gear box used in the drive mechanism of the device of Figure 4;
Figure 7A is a top view of the device of Figure 4 with an enlarged view of a detail of the device of Figure 4;
Figure 7B is a cross-sectional side view of the device of Figure 4 with an enlarged view of a detail of the device of Figure 4;
Figure 8 is a perspective view of a device for preparing food ingredients according to a further embodiment of the invention; and
Figure 9 is a perspective view of a device for preparing food ingredients according to a still further embodiment of the invention.

### DETAILED DESCRIPTION OF THE EMBODIMENTS

Throughout the description, terms such as 'horizontal', 'vertical', 'upper', 'lower', 'upwards', 'downwards', and so on relate to the orientation of the device as shown in the accompanying drawings.

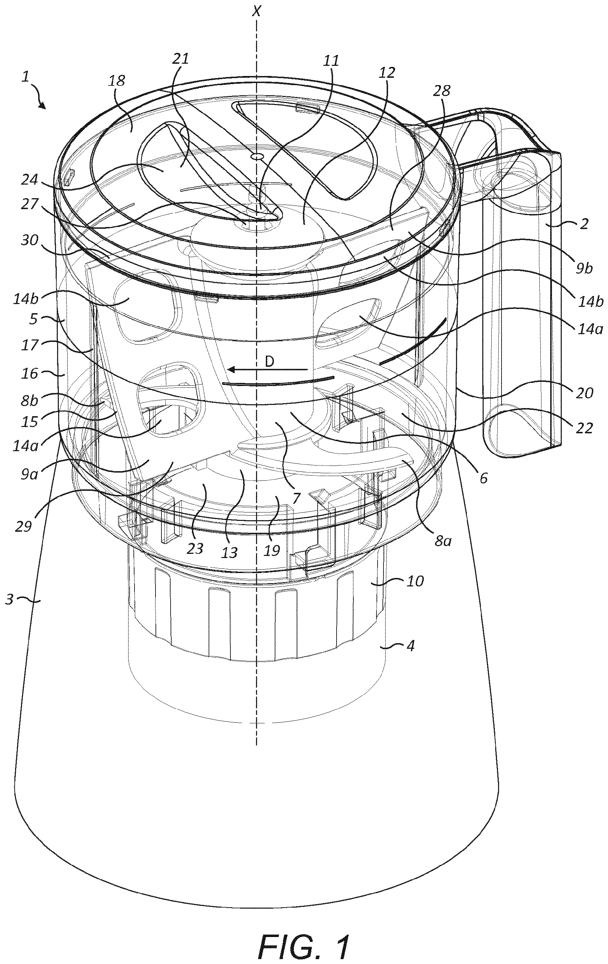

Referring to Figure 1, a device 1 for preparing food ingredients according to an embodiment of the invention is shown. The device 1 comprises:
- a jar 5 for receiving food ingredients; and
- an accessory 6 configured to rotate in the jar 5 along a vertical axis X, the accessory 6 comprising:
   a) a central body 7 extending along the vertical axis X;
   b) at least one blunt blade, for example a pair of blunt blades 8a, 8b, extending radially from the central body 7; and
   c) at least one wing, for example a pair of wings 9a, 9b, extending radially from the central body 7, the at least one wing being inclined downwards in direction of the tangential direction D of the rotation movement of the accessory 6 .

The device 1 comprises a stationary base 3 and a drive mechanism 10 including a drive shaft 11. The stationary base 3 comprises a motor 4 for coupling with the drive mechanism 10 and rotating the drive shaft 11 around the vertical axis X. The accessory 6 is mounted on the drive shaft 11 such that the accessory 6 is driven in rotation around the vertical axis X by the drive shaft 11 when the drive shaft 11 rotates. The motor 4 may be adapted to operate the accessory 6 at a rotational speed in the range [3000; 10 000] rpm.

The jar 5 is substantially cylindrical. The jar 5 comprises a bottom surface 19, a lateral wall 20 having an inner surface 16, and an upper aperture 21. The jar 5 may comprise a handle 2. Optionally, the jar 5 comprises at least one longitudinal rib 17 extending vertically along the inner surface 16 of the jar 5. Optionally, the jar 5 comprises a pair of longitudinal ribs 17. The two longitudinal ribs 17 may be arranged diametrically opposed on the inner surface 16. Each longitudinal rib 17 may extend from the inner surface 16 towards the central body 7 on a distance in the range [1; 2] millimetres. That is, each longitudinal rib 17 may have a thickness in the range [1; 2] millimetres.

Optionally, the device 1 comprises a lid 18 for closing the upper aperture 21 of the jar 5. The lid 18 may close the upper aperture 21 via a closely fitting, for example a bayonet fit. The lid 18 may additionally have a connection element in the form of a bushing and a top pin (not shown) for alignment of the accessory 6 along the vertical axis X.

The bottom surface 19, the lateral wall 20 and the lid 18 may define an internal volume 22 of the jar 5 having a lower region 23 and an upper region 24. The internal volume 22 is, for example, in the range [400; 1000] millilitres.

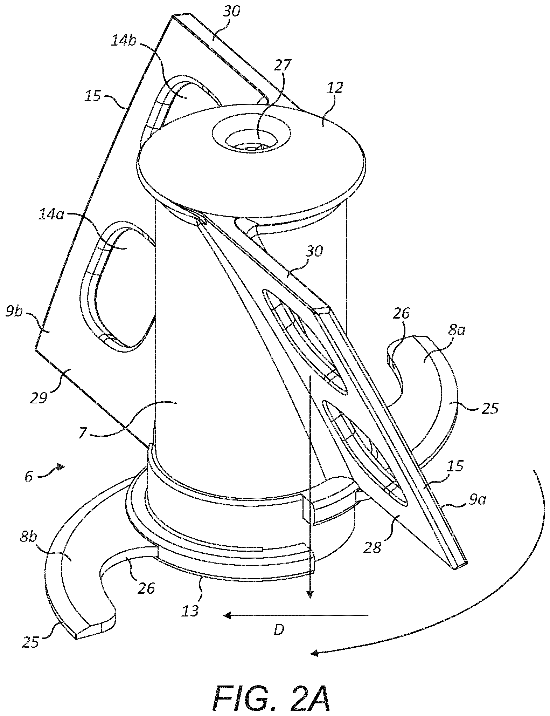

Referring to Figures 2A to 2C, the central body 7 of the accessory 6 has a substantially cylindrical shape. The central body 7 is adapted to by driven in rotation about the vertical axis X by the motor 4 via the drive shaft 11. The central body 7 has an upper end 12 and a lower end 13.

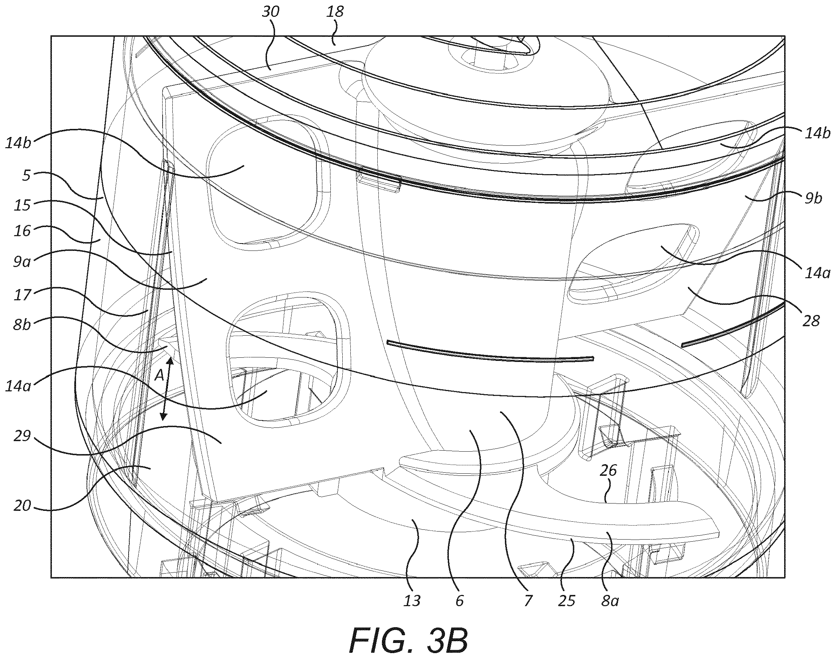

As shown in Figure 2A and as mentioned above, the accessory 6 or crushing tool comprises first and second shearing blunt blades 8a, 8b disposed opposite to each other about the central body 7. The term "blunt blade" used herein refers to a blade having a blunt or non-sharp edge, i.e. an edge which is adapted to crush or mash food ingredients and/or which is not adapted to cut or slice food ingredients. The first and second blunt blades 8a, 8b crush the food ingredients to release liquid and flavor so that a rich and chunky paste sauce is obtained. The first and second blunt blades 8a, 8b are disposed in the lower region 23 of the jar 5. The first and second blunt blades 8a, 8b are arranged proximate the lower end 13 of the central body 7. The second blunt blade 8b is disposed lower than the first blunt blade 8a. That is, the second blunt blade 8b is disposed closer to the bottom surface 19 of the jar 5 than the first blunt blade 8a. The second blunt blade 8b is located from the bottom surface 19 at a distance A in the range [1; 5] millimetres, and preferably in the range [3; 4] millimetres, as visible in Figure 3B. Each blunt blade 8a, 8b comprises a blunt working edge 25 (e.g. defining a flat surface) and a trailing edge 26. The first and second blunt blades 8a, 8b form together a generally S-shaped blade assembly.

Optionally, the accessory 6 is adapted to be secured in the jar 5 in a use position to allow the rotation of the accessory 6 along the vertical axis X and to prevent the accessory 6 from translating along the vertical axis X. Optionally, the central body 7 comprises a connection element 27 in the form of a top bushing location cooperating with the bushing and top pin of the lid 18. Such coupling between the central body 7 and the lid 18 allows the accessory 6 to remain in position in the jar 5 during rotation of the accessory 6 in the jar 5.

The accessory 6 comprises first and second wings or whipping wings 9a, 9b disposed opposite to each other about the central body 7. The first and second wings 9a, 9b extend from the blunt blades 8a, 8b and until proximate the upper end 12 of the central body 7. The first and second blunt blades 8a, 8b and the first and second wings 9a, 9b are alternate and distributed at regular angles around the vertical axis X.

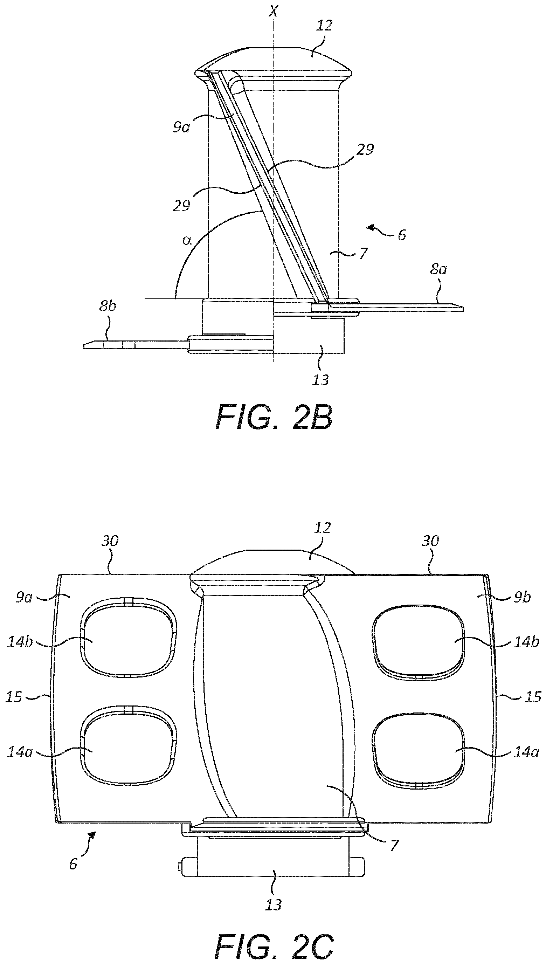

The first and second wings 9a, 9b are oblique relative to the vertical axis X. In particular, the first and second wings 9a, 9b are inclined or tilted downwards in direction of the tangential direction D of the rotation movement of the accessory 6. The first wing 9a may be inclined towards the first blunt blade 8a and the second wing 9b may be inclined towards the second blunt blade 8b. Each wing 9a comprises a working surface 28 and a trailing surface 29. The trailing surfaces 29 of the first and second wings 9a, 9b may be inclined towards the working edge 25 of the first and second blunt blades 8a, 8b respectively. The working surfaces 28 and the blunt working edges 25 may be disposed relative to each other such that, when the accessory 6 rotates about the vertical axis X, the food ingredients are directed towards the first and second blunt blades 8a, 8b by the working surfaces 28 to be then crushed by the blunt working edges 25. The first and second wings 9a, 9b are inclined towards the lower region 23 of the jar 5 to direct the food towards the lower region 23 when the accessory 6 rotates about the vertical axis X. As shown in Figure 2B, the first and second wings 9a, 9b are inclined at an angle α in the range [55; 65] degrees compared to a horizontal axis perpendicular to the vertical axis X. This provides a downwardly orientated pushing force to push the food ingredients towards the lower region 23. This ensures that the food ingredients are concentrated in the lower region 23 where the first and second blunt blades 8a, 8b are located and thereby ensures an efficient crushing of the food ingredients.

As shown in Figure 2C, each wing 9a, 9b comprises at least one hole or opening, for example two openings 14a, 14b. In one embodiment, the two openings 14a, 14b cover an area in the range [30; 50] % of the total area of a given wing 9a, 9b. Each wing 9a, 9b may comprise a lower opening 14a and an upper opening 14b disposed above the lower opening 14a. The openings 14a, 14b may have a squircle shape.

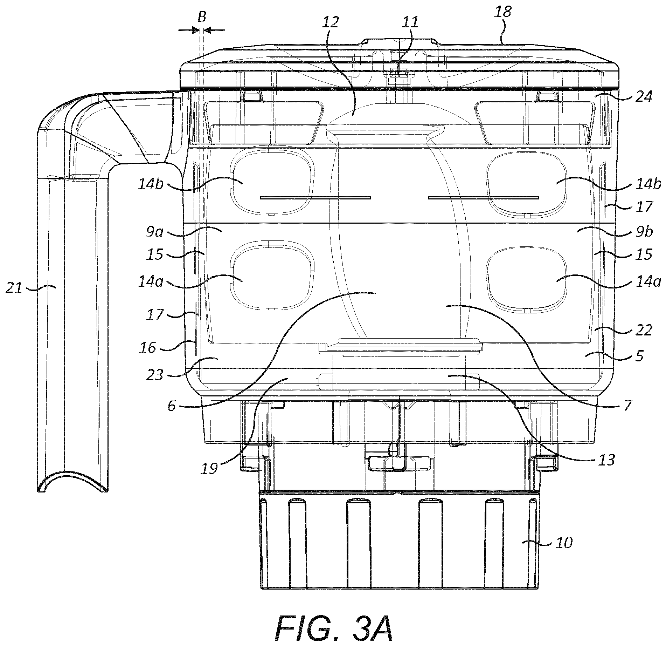

Each wing 9a, 9b comprises a lateral or free end 15 opposite to the central body 7 and a top end 30 facing the lid 18. As represented in Figure 3A, each wing 9a, 9b may extend up to reaching the proximity of the inner surface 16 of the jar 5. In particular, each wing 9a, 9b may extend such that the free end 15 reaches the proximity of the inner surface 16. Optionally, the distance B between the free end 15 and the inner surface 16 is in the range [1; 5] millimetres and is advantageously in the range [1; 2] millimetres. This ensures a good texture for the paste sauce, as well as a satisfactory value for the torque loading of the drive mechanism 10 of the device 1. The free end 15 may have a profile being complementary of the profile of the longitudinal ribs 17. For example, the longitudinal ribs 17 may have a curved profile and the free ends 15 may have a complementary curved profile.

In use, the drive mechanism 10 and the jar 5 are positioned on the stationary base 3 such that the drive mechanism 10 is coupled with the motor 4. The accessory 6 is mounted to the drive shaft 11 in the internal volume 22 of the jar 5. Then, food ingredients to be crushed, for example chillies, garlic, ginger, onions, shallots, tomatoes etc..., are placed in the internal volume 22. The lid 18 is placed on the upper aperture 21 and closes the jar 5 via the bayonet fit. The bushing of the lid 18 locates in the bushing location 37 of the central body 7 such that the accessory 6 is prevented from translating along the vertical axis X during rotation and is maintained in the use position. Then, the motor 4 is activated, for example via a switch (not shown) on the stationary base 3. The motor 4 drives the drive shaft 11 in rotation about the vertical axis X which in turn drives the accessory 6 in rotation about the vertical axis X. The first and second blunt blades 8a, 8b therefore rotate and crush the food ingredients. The first and second wings 9a, 9b, which are inclined downwards in direction of the tangential direction D of the rotation movement of the accessory 6, direct the food ingredients downwards, i.e. towards the blunt blades 8a, 8b and thereby ensure that the food ingredients are concentrated in the lower region 23. In particular, the food ingredients are directed towards the blunt blades 8a, 8b by the working surface 28 of the wings 9a, 9b to be then crushed by the blunt working edge 25 of the blunt blades 8a, 8b. Once the food ingredients are mixed and crushed enough to form a paste sauce of satisfactory consistency, the motor 4 is deactivated so that the accessory 6 stops rotating. Then, the paste sauce is removed from the jar. This last step is facilitated by the wings 9a, 9b extending up to reaching the proximity of the inner surface 16, which reduces the food ingredients sticking on the inner surface 16.

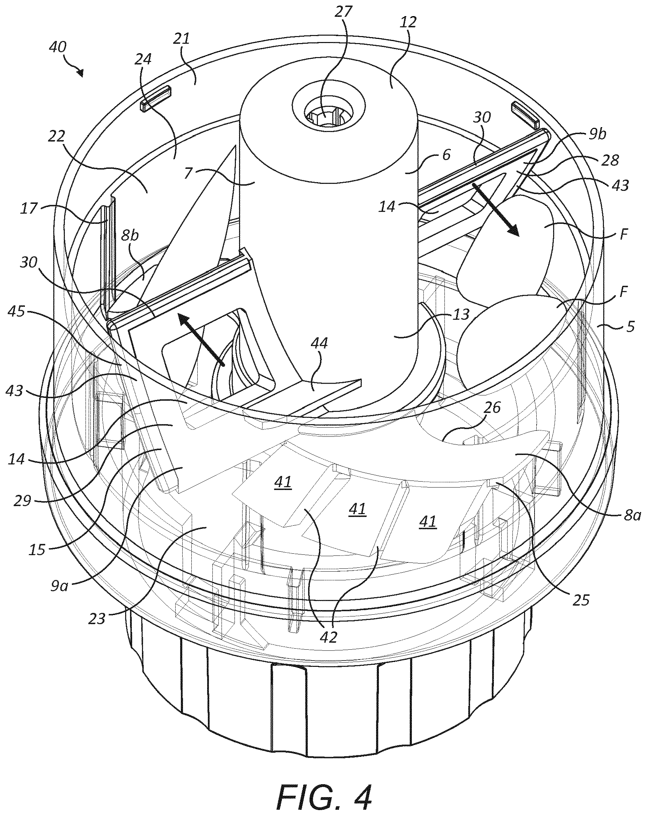

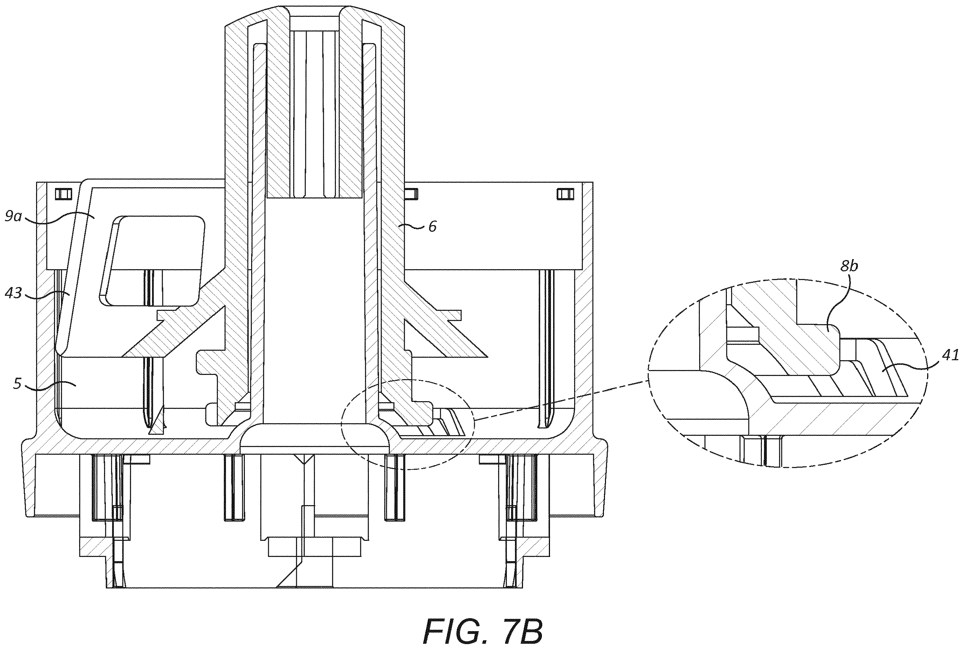

Referring now to Figures 4 to 7D, an accessory 6 of a device 40 for preparing food ingredients F according to an alternative embodiment of the invention is shown. The device 40 is similar to the device 1 described above in relation to Figures 1 to 3B, with like features retaining the same reference numerals. However, a difference is that the first and second blades 8a, 8b each comprise a plurality of projections 41, for example each blunt blade 8a, 8b comprises three projections 41. The projections 41 may be arranged on the working edges 25 of the blunt blades 8a, 8b.Optionally, the projections 41 extend obliquely downwards, towards the bottom surface 19. In particular, each projection 41 may extend from one of the blunt blades 8a, 8b up to reaching the proximity of the bottom surface 19, as visible in more details in Figure 7B. In an alternative embodiment (not shown), each projection touches the bottom surface 19. The projections 41 allow for the food ingredients F to be stirred upwards in the jar 5, and therefore consequently blended again by the first and second wings 9a, 9b. Optionally, a slot 42 may extend between two adjacent projections 41. The slots 42 may help to make the skin of some food ingredients F such as chilli smaller.

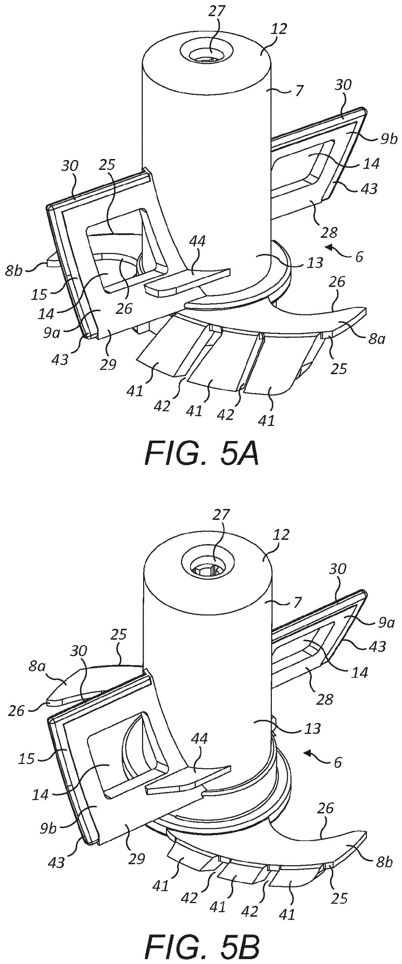

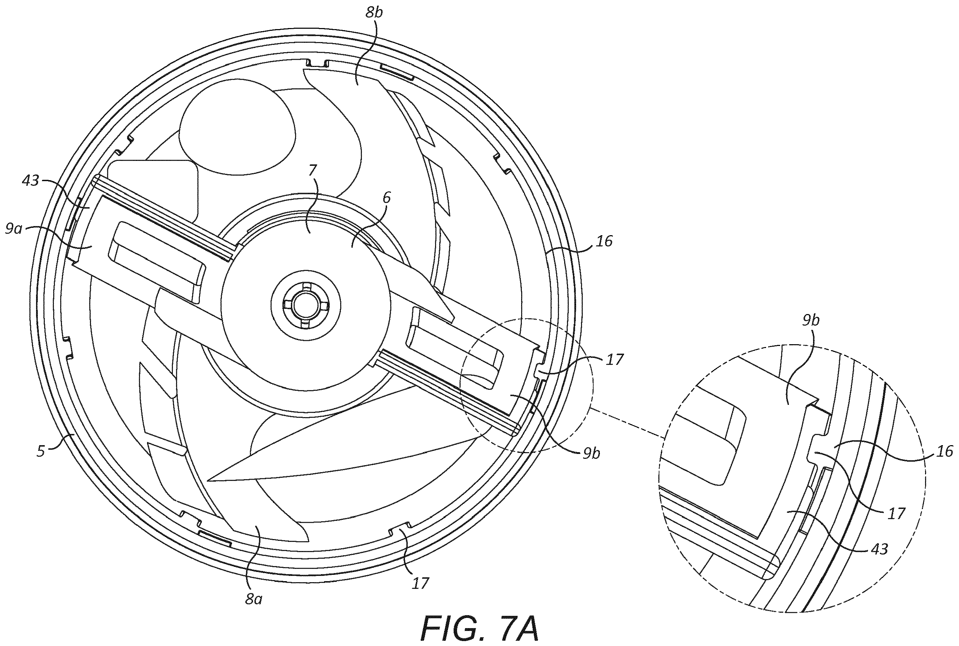

As shown in Figures 5A and 5B, the free end 15 of each wing 9a, 9b is equipped with a soft material or elastic rib 43. Optionally, the elastic rib 43 is in contact with the inner surface 16. Optionally, the elastic rib 43 touches the inner surface 16 such that no gap exists between the elastic rib 43 and the inner surface 16. The elastic rib 43 may extend from the free end 15 towards the inner surface 16 on a distance in the range [2; 2.5] millimetres. That is, the elastic rib 43 may have a thickness in the range [2; 2.5] millimetres. The elastic rib 43 can therefore sweep the inner surface 16 when the accessory 6 rotates. Therefore, the problem of having the food ingredients F sticking on the inner surface 16 is overcome. This also helps to clean the inner surface 16. The elastic rib 43 may further help to blend again the food ingredients F once they have been stirred up by the projections 41. As shown in more details in Figure 7A, the elastic rib 43 may be adapted to push the food ingredients towards the longitudinal ribs 17 when the accessory 6 rotates so that the food ingredients F crash to the longitudinal ribs 17. The elastic rib 43 may have a free lateral edge 45 in contact with the inner surface 16. The free lateral edge 45 may have a rounded shape. The free lateral edge 45 may be in the form of an arc of a circle having a radius of approximately 1 millimetre. Optionally, the elastic rib 43 also extends along the top end 30 of each of the first and second wings 9a, 9b. Optionally, each wing 9a, 9b comprises a panel or enhanced rib 44 extending transversally from the trailing surface 29 of each wing 9a, 8b. The panel 44 further helps to mix the food ingredients F.

As shown in Figures 5A and 5B, the first and second wings 9a, 9b each comprises a single opening 14. The opening 14 may have a substantially square shape.

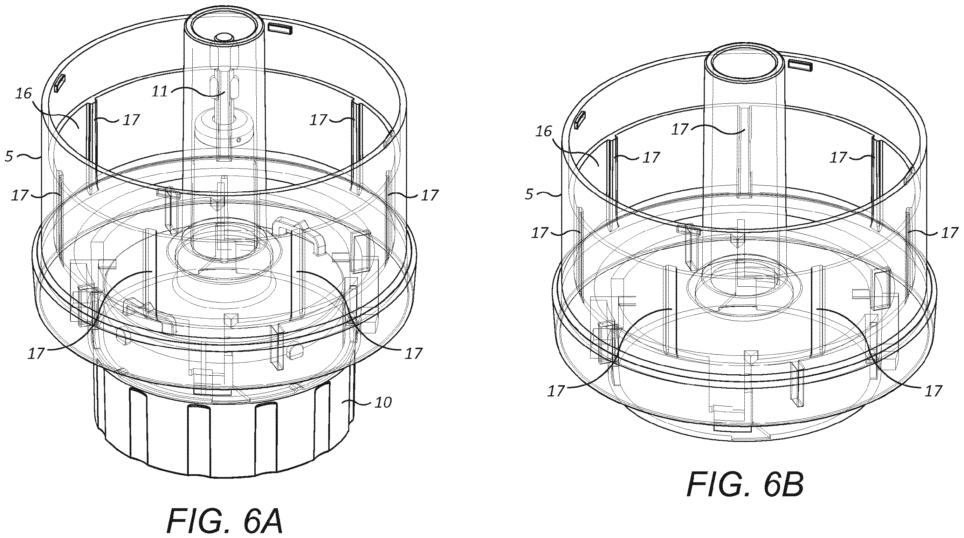

As shown in Figures 6A and 6B, the jar 5 comprises an odd number of longitudinal ribs 17, for example five or seven longitudinal ribs 17. The longitudinal ribs 17 may be regularly distributed on the inner surface 16. This increases the crashing frequency of the food ingredients F on the longitudinal ribs 17. Optionally, the diameter of the jar 5 is less than 105 millimetres, and the length of the jar 5 along the vertical axis or height of the jar 5 is less than 80 millimetres.

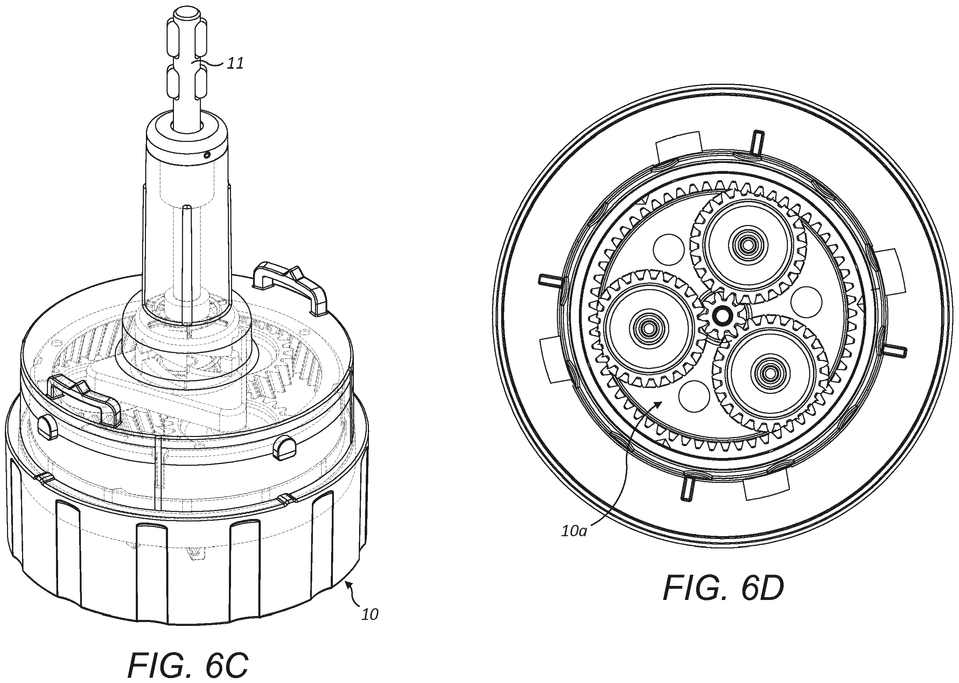

The jar 5 and the accessory 6 can operate on any conventional kitchen appliance such as blenders, food processors, kitchen machines, hand mixers, hand blenders, choppers or the like, having a drive shaft 11 as shown in Figure 6C and a driving mechanism 10 comprising a planetary gear box 10a as shown in Figure 6D.

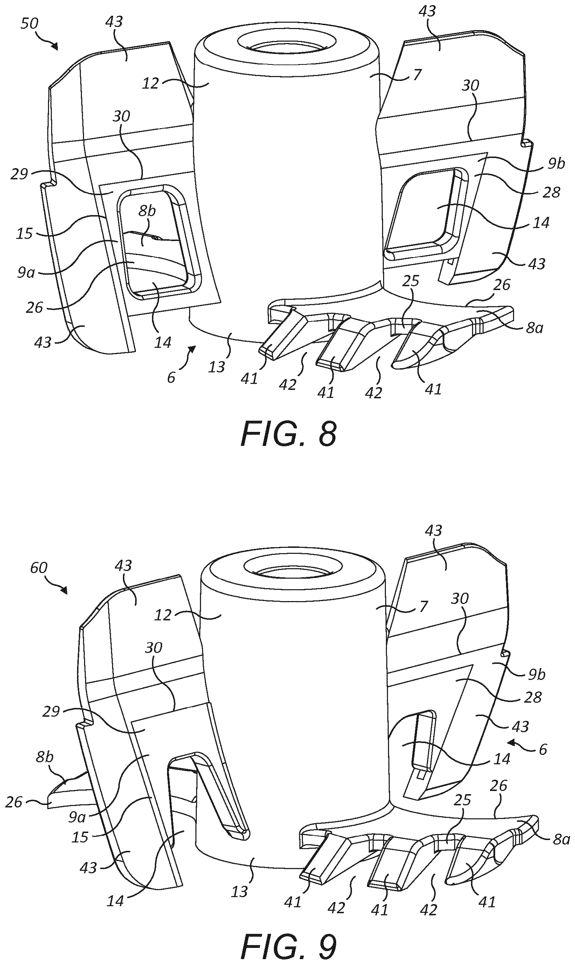

Referring now to Figure 8, an accessory 6 of a device 50 for preparing food ingredients according to an alternative embodiment of the invention is shown. The device 50 is similar to the device 40 described above in relation to Figures 4 to 7D, with like features retaining the same reference numerals. Similarly to the device 40 shown in Figures 4 to 7D, the accessory 6 shown in Figure 8 comprises an elastic rib 43 disposed on the free end 15 of each first and second wing 9a, 9b. However, a difference is that the elastic rib 43 also extends along the top end 30 of each wing 9 and up to reaching the proximity of the lid 18. In one embodiment, the elastic rib 43 may be in contact with the lid 18 when the lid 18 closes the jar 5. This helps to avoid the food ingredients sticking on the lid and therefore helps to clean the lid 18.

Referring now to Figure 9, an accessory 6 of a device 60 for preparing food ingredients according to an alternative embodiment of the invention is shown. The device 60 is similar to the device 50 described above in relation to Figure 8, with like features retaining the same reference numerals. However, a difference is that the opening 14 in each of the first and second wings 9a, 9b is open to the lower region 23 of the jar 5. This may allow for the torque loading of the drive mechanism 10 of the device 1 to be further reduced.

Although in the above described embodiments the devices 1, 40, 50, 60 have been described having the pair of blunt blades 8a, 8b and the pair of wings 9a, 9b alternate and distributed at regular angles around the vertical axis X, in alternative embodiments (not shown), each wing 9a, 9b may extend above one of the blunt blades 8a, 9b.

Although in the above described embodiments the devices 1, 40, 50, 60 have been described having a motor 4 arranged in the stationary base 3 so that the rotation force is applied from the bottom of the jar 5, in alternative embodiments (not shown), the motor 4 is instead arranged on top of the jar 5 so that the rotation force is applied from the top of the jar 5.

## Claims

1. A device (1, 40, 50, 60) for preparing food ingredients (F), the device comprising:
- a jar (5) for receiving food ingredients (F) to be prepared; and
- an accessory (6) configured to rotate in the jar (5) along a vertical axis (X) of the jar (5), the accessory (6) comprising:
- a central body (7) extending vertically along the vertical axis (X), the central body (7) comprising an upper end (12) and a lower end (13);
- at least one blunt blade (8a, 8b) extending radially from the central body (7) and being arranged proximate said lower end (13); and
- at least one wing (9a, 9b) extending radially from the central body (7) and extending between the at least one blunt blade (8a, 8b) and proximate said upper end (12), the at least one wing (9a, 9b) being inclined downwards in direction of the tangential direction (D) of the rotation movement of the accessory (6), the at least one wing (9a, 9b) comprising at least one opening (14, 14a, 14b);
**characterized in that**
the at least one blunt blade (8a, 8b) is disposed in a lower region (23) of the jar (5), and
the at least one wing (9a, 9b) is inclined towards the lower region (23) of the jar (5) at an angle (α) in the range [55; 65] degrees compared to a horizontal axis perpendicular to the vertical axis (X) to provide a downwardly orientated pushing force to push the food ingredients (F) towards the lower region (23) of the jar (5) where the at least one blunt blade (8a, 8b) is located to crush the food ingredients (F).

2. A device (1, 40, 50, 60) according to claim 1, wherein the at least one opening (14, 14a, 14b) of a given wing among said at least one wing (9a, 9b) covers an area in the range [30; 50] % of the total area of said given wing.

3. A device (1, 40, 50, 60) according to any preceding claim, wherein the at least one wing (9a, 9b) comprises a free end (15) opposite to the central body (7), the at least one wing (9a, 9b) extending up to reaching the proximity of an inner surface (16) of the jar (5).

4. A device (1, 40, 50, 60) according to any preceding claim, wherein the jar (5) comprises at least one longitudinal rib (17) extending vertically along an inner surface (16) of the jar (5).

5. A device (1, 40, 50, 60) according to claim 4, wherein the free end (15) has a profile being complementary of the profile of the at least one longitudinal rib (17).

6. A device (1, 40, 50, 60) according to any preceding claim, wherein the accessory (6) is adapted to be secured in the jar (5) in a use position to allow the rotation of the accessory (6) along the vertical axis (X) and to prevent the accessory (6) from translating along the vertical axis (X).

7. A device (1, 40, 50, 60) according to any preceding claim, further comprising a lid (18) for closing the jar (5), the lid (18) and the central body (7) comprising a connection element (27) cooperating for coupling the lid (18) to the central body (7).

8. A device (1, 40, 50, 60) according to any preceding claim, wherein the jar (5) comprises a bottom surface (19), the at least one blunt blade (8a, 8b) being located from the bottom surface (19) at a distance in the range [1; 5] millimeters.

9. A device (1, 40, 50, 60) according to any preceding claim, wherein the at least one blunt blade (8a, 8b) and the at least one wing (9a, 9b) are alternate and distributed at regular angles around the vertical axis (X).

10. A device (1, 40, 50, 60) according to any preceding claim, wherein the accessory (6) comprises a first blunt blade (8a) and a second blunt blade (8b) disposed opposite to each other about the central body (7), and a first wing (9a) and a second wing (9b) disposed opposite to each other about the central body (7), wherein the first wing (9a) is inclined towards the first blunt blade (8a) and the second wing (9b) is inclined towards the second blunt blade (8b).

11. A device (1, 40, 50, 60) according to any preceding claim, further comprising a stationary base (3) for receiving the jar (5), the stationary base (3) comprising a motor (4) for rotating the accessory (6) around the vertical axis (X).

## Patentansprüche

1. Vorrichtung (1, 40, 50, 60) zur Zubereitung von Lebensmittelzutaten (F), wobei die Vorrichtung umfasst:
- ein Gefäß (5) zum Aufnehmen von Lebensmittelzutaten (F), die zubereitet werden sollen; und
- ein Zubehör (6), das dazu konfiguriert ist, im Gefäß (5) entlang einer vertikalen Achse (X) des Gefäßes (5) zu drehen, wobei das Zubehör (6) umfasst:
- einen zentralen Körper (7), der sich vertikal entlang der vertikalen Achse (X) erstreckt, wobei der zentrale Körper (7) ein oberes Ende (12) und ein unteres Ende (13) umfasst;
- mindestens eine stumpfe Klinge (8a, 8b), die sich radial vom zentralen Körper (7) erstreckt und nahe dem unteren Ende (13) eingerichtet ist; und
- mindestens einen Flügel (9a, 9b), der sich radial vom zentralen Körper (7) erstreckt und sich zwischen der mindestens einen stumpfen Klinge (8a, 8b) und nahe dem oberen Ende (12) erstreckt, wobei der mindestens eine Flügel (9a, 9b) nach unten in Richtung der tangentialen Richtung (D) der Drehbewegung des Zubehörs (6) geneigt ist, wobei der mindestens eine Flügel (9a, 9b) mindestens eine Öffnung (14, 14a, 14b) umfasst;
**dadurch gekennzeichnet, dass**
die mindestens eine stumpfe Klinge (8a, 8b) in einem unteren Bereich (23) des Gefäßes (5) angeordnet ist, und
der mindestens eine Flügel (9a, 9b) verglichen mit einer zur vertikalen Achse (X) senkrechten horizontalen Achse in einem Winkel (α) im Bereich von [55; 65] Grad zum unteren Bereich (23) des Gefäßes (5) geneigt ist, um eine nach unten gerichtete Druckkraft bereitzustellen, um die Lebensmittelzutaten (F) zum unteren Bereich (23) des Gefäßes (5) zu drücken, wo sich die mindestens eine stumpfe Klinge (8a, 8b) befindet, um die Lebensmittelzutaten (F) zu zerkleinern.

2. Vorrichtung (1, 40, 50, 60) nach Anspruch 1, wobei die mindestens eine Öffnung (14, 14a, 14b) eines gegebenen Flügels aus dem mindestens einen Flügel (9a, 9b) einen Flächeninhalt im Bereich von [30; 50] % des Gesamtflächeninhalts des gegebenen Flügels abdeckt.

3. Vorrichtung (1, 40, 50, 60) nach einem vorstehenden Anspruch, wobei der mindestens eine Flügel (9a, 9b) ein freies Ende (15) gegenüber dem zentralen Körper (7) umfasst, wobei sich der mindestens eine Flügel (9a, 9b) bis Erreichen der Nähe einer Innenfläche (16) des Gefäßes (5) nach oben erstreckt.

4. Vorrichtung (1, 40, 50, 60) nach einem vorstehenden Anspruch, wobei das Gefäß (5) mindestens eine Längsrippe (17) umfasst, die sich vertikal entlang einer Innenfläche (16) des Gefäßes (5) erstreckt.

5. Vorrichtung (1, 40, 50, 60) nach Anspruch 4, wobei das freie Ende (15) ein Profil aufweist, das zum Profil der mindestens einen Längsrippe (17) komplementär ist.

6. Vorrichtung (1, 40, 50, 60) nach einem vorstehenden Anspruch, wobei das Zubehör (6) dazu geeignet ist, in einer Gebrauchsstellung im Gefäß (5) gesichert zu werden, um das Drehen des Zubehörs (6) entlang der vertikalen Achse (X) zu ermöglichen und das Zubehör (6) am Verrutschen entlang der Längsachse (X) zu hindern.

7. Vorrichtung (1, 40, 50, 60) nach einem vorstehenden Anspruch, weiter einen Deckel (18) zum Schließen des Gefäßes (5) umfassend, wobei der Deckel (18) und der zentrale Körper (7) ein Verbindungselement (27) umfassen, das zum Koppeln des Deckels (18) mit dem zentralen Körper (7) zusammenwirkt.

8. Vorrichtung (1, 40, 50, 60) nach einem vorstehenden Anspruch, wobei das Gefäß (5) eine Bodenfläche (19) umfasst, wobei sich die mindestens eine stumpfe Klinge (8a, 8b) in einem Abstand im Bereich von [1; 5] Millimetern von der Bodenfläche (19) befindet.

9. Vorrichtung (1, 40, 50, 60) nach einem vorstehenden Anspruch, wobei sich die mindestens eine stumpfe Klinge (8a, 8b) und der mindestens eine Flügel (9a, 9b) abwechseln und in regelmäßigen Winkeln um die vertikale Achse (X) herum verteilt sind.

10. Vorrichtung (1, 40, 50, 60) nach einem vorstehenden Anspruch, wobei das Zubehör (6) eine erste stumpfe Klinge (8a) und eine zweite stumpfe Klinge (8b) umfasst, die einander gegenüber um den zentralen Körper (7) herum angeordnet sind, und einen ersten Flügel (9a) und einen zweiten Flügel (9b), die einander gegenüber um den zentralen Körper (7) herum angeordnet sind, wobei der erste Flügel (9a) zur ersten stumpfen Klinge (8a) geneigt ist, und der zweite Flügel (9b) zur zweiten stumpfen Klinge (8b) geneigt ist.

11. Vorrichtung (1, 40, 50, 60) nach einem vorstehenden Anspruch, weiter eine stationäre Basis (3) zum Aufnehmen des Gefäßes (5) umfassend, wobei die stationäre Basis (3) einen Motor (4) zum Drehen des Zubehörs (6) um die vertikale Achse (X) herum umfasst.

## Revendications

1. Dispositif (1, 40, 50, 60) permettant de préparer des ingrédients alimentaires (F), le dispositif comprenant :
- un récipient (5) permettant de recevoir des ingrédients alimentaires (F) devant être préparés ; et
- un accessoire (6) configuré pour tourner dans le récipient (5) le long d'un axe vertical (X) du récipient (5), l'accessoire (6) comprenant :
- un corps central (7) s'étendant verticalement le long de l'axe vertical (X), le corps central (7) comprenant une extrémité supérieure (12) et une extrémité inférieure (13),
- au moins une lame émoussée (8a, 8b) s'étendant radialement à partir du corps central (7) et étant agencée à proximité de ladite extrémité inférieure (13) ; et
- au moins une aile (9a, 9b) s'étendant radialement à partir du corps central (7) et s'étendant entre l'au moins une lame émoussée (8a, 8b) et à proximité de ladite extrémité supérieure (12), l'au moins une aile (9a, 9b) étant inclinée vers le bas en direction de la direction tangentielle (D) du mouvement de rotation de l'accessoire (6), l'au moins une aile (9a, 9b) comprenant au moins une ouverture (14, 14a, 14b) ;
**caractérisé en ce que**
l'au moins une lame émoussée (8a, 8b) est disposée dans une région inférieure (23) du récipient (5), et
l'au moins une aile (9a, 9b) est inclinée vers la région inférieure (23) du récipient (5) à un angle (α) dans la plage [55 ; 65] degrés par rapport à un axe horizontal perpendiculaire à l'axe vertical (X) pour fournir une force de poussée orientée vers le bas pour pousser les ingrédients alimentaires (F) vers la région inférieure (23) du récipient (5) où l'au moins une lame émoussée (8a, 8b) se situe pour écraser les ingrédients alimentaires (F).

2. Dispositif (1, 40, 50, 60) selon la revendication 1, dans lequel l'au moins une ouverture (14, 14a, 14b) d'une aile donnée parmi ladite au moins une aile (9a, 9b) recouvre une superficie dans la plage [30 ; 50] % de la superficie totale de ladite aile donnée.

3. Dispositif (1, 40, 50, 60) selon l'une quelconque des revendications précédentes, dans lequel l'au moins une aile (9a, 9b) comprend une extrémité libre (15) en regard du corps central (7), l'au moins une aile (9a, 9b) s'étendant jusqu'à atteindre la proximité d'une surface intérieure (16) du récipient (5).

4. Dispositif (1, 40, 50, 60) selon l'une quelconque des revendications précédentes, dans lequel le récipient (5) comprend au moins une nervure longitudinale (17) s'étendant verticalement le long d'une surface intérieure (16) du récipient (5).

5. Dispositif (1, 40, 50, 60) selon la revendication 4, dans lequel l'extrémité libre (15) a un profil qui est complémentaire du profil de l'au moins une nervure longitudinale (17).

6. Dispositif (1, 40, 50, 60) selon l'une quelconque des revendications précédentes, dans lequel l'accessoire (6) est adapté pour être fixé dans le récipient (5) dans une position d'utilisation pour permettre la rotation de l'accessoire (6) le long de l'axe vertical (X) et pour empêcher l'accessoire (6) de translater le long de l'axe vertical (X).

7. Dispositif (1, 40, 50, 60) selon l'une quelconque des revendications précédentes, comprenant en outre un couvercle (18) permettant de fermer le récipient (5), le couvercle (18) et le corps central (7) comprenant un élément de liaison (27) coopérant pour coupler le couvercle (18) au corps central (7).

8. Dispositif (1, 40, 50, 60) selon l'une quelconque des revendications précédentes, dans lequel le récipient (5) comprend une surface de dessous (19), l'au moins une lame émoussée (8a, 8b) étant située à partir de la surface de dessous (19) à une distance dans la plage [1 ; 5] millimètres.

9. Dispositif (1, 40, 50, 60) selon l'une quelconque des revendications précédentes, dans lequel l'au moins une lame émoussée (8a, 8b) et l'au moins une aile (9a, 9b) alternent et sont distribuées à des angles réguliers autour de l'axe vertical (X).

10. Dispositif (1, 40, 50, 60) selon l'une quelconque des revendications précédentes, dans lequel l'accessoire (6) comprend une première lame émoussée (8a) et une seconde lame émoussée (8b) disposées en regard l'une de l'autre autour du corps central (7), et une première aile (9a) et une seconde aile (9b) disposées en regard l'une de l'autre autour du corps central (7), dans lequel la première aile (9a) est inclinée vers la première lame émoussée (8a) et la seconde aile (9b) est inclinée vers la seconde lame émoussée (8b).

11. Dispositif (1, 40, 50, 60) selon l'une quelconque des revendications précédentes, comprenant en outre une base fixe (3) permettant de recevoir le récipient (5), la base fixe (3) comprenant un moteur (4) permettant de faire tourner l'accessoire (6) autour de l'axe vertical (X).
